# EUROPÄISCHE PATENTSCHRIFT

(11) **EP 1 623 494 B1**
(45) Veröffentlichungstag und Bekanntmachung des Hinweises auf die Patenterteilung: **14.05.2008**
(21) Anmeldenummer: 04730840.8
(22) Anmeldetag: 03.05.2004
(51) Int. Cl.: H02M 3/335

(54) **GLEICHSPANNUNGSWANDLER MIT EINER EINGANGSSCHALTSTUFE UND MEHREREN AUSGANGSKANÄLEN**
D.C. CONVERTER COMPRISING AN INPUT SWITCHING STEP AND SEVERAL OUTPUT CHANNELS
CONVERTISSEUR CONTINU-CONTINU COMPORTANT UN ETAGE DE COMMUTATION D'ENTREE ET PLUSIEURS CANAUX DE SORTIE

(30) Priorität: 12.05.2003 DE 10321234
(43) Veröffentlichungstag der Anmeldung: 08.02.2006
(73) Patentinhaber: MINEBEA Co., Ltd., Kitasaku-gun, Nagano-ken (JP)
(72) Erfinder: WEGER, Robert, Dr., 4600 Wels (AT)
(74) Vertreter: Liesegang, Eva
(86) Internationale Anmeldenummer: PCT/EP2004/004681
(87) Internationale Veröffentlichungsnummer: WO 2004/100346

(56) Entgegenhaltungen:
- DE-A- 10 260 246
- US-B1- 6 369 525

## Beschreibung

Die Erfindung betrifft einen Gleichspannungswandler mit einer Eingangsschaltstufe auf einer Primärseite und mehreren Ausgangskanälen auf einer Sekundärseite des Wandlers. Jeder Ausgangskanal erzeugt vorzugsweise eine andere Ausgangsspannung.

Ein Gleichspannungswandler, oder DC-DC-Wandler, erzeugt aus einer Eingangsgleichspannung eine Ausgangsgleichspannung (Einkanalwandler) oder mehrere Ausgangsgleichspannungen (Mehrkanalwandler). Allgemeine Qualitätskriterien solcher Wandler sind vor allem der Wandlungswirkungsgrad, die Stabilität der Ausgangsspannungen sowie die Unterdrükkung von hochfrequenten Störemissionen. DC-DC-Wandler finden breite Anwendung beispielsweise in Schaltnetzteilen. Insbesondere bei Stromversorgungen für Computeranlagen kommen meist Mehrkanalwandler zum Einsatz. Bei diesen Anwendungen erzeugt ein sog. Power-Factor-Controller (PFC) aus der Netzwechselspannung eine Zwischenkreisgleichspannung von ca. 400 Volt. Ein nachgeschalteter Mehrkanal DC-DC-Wandler generiert daraus Ausgangsspannungen von typischerweise 12 Volt, 5 Volt und 3,3 Volt.

Die Regelung in DC-DC-Wandlern hat die Aufgabe, deren Ausgangsspannungen konstant bei definierten Sollwerten zu halten, trotz veränderlicher Lastverhältnisse an den Ausgängen und eventuell schwankender Eingangsspannung.

Die Eingangsschaltstufe eines DC-DC-Wandlers umfaßt in der Regel einen Pulsbreitenmodulator, um die auf der Primärseite zur Verfügung stehende Leistung einzustellen.

Solange nur eine einzige Ausgangsspannung benötigt wird (Einkanalwandler), wird die Pulsbreite der Eingangsschaltstufe - ausgelöst durch die Abweichung des Istwertes der Ausgangsspannung vom Sollwert - verändert (z. B. Ausgangsspannung kleiner als Sollwert initiiert Vergrößerung der Pulsbreite etc.). Abhängig von den speziellen Erfordernissen der Anwendung können unterschiedliche Regelcharakteristiken angewandt werden (PI, PID, etc.).

Sobald mehrere Ausgangsspannungen von einer Eingangsschaltstufe abgeleitet werden, besteht grundsätzlich die Möglichkeit eine Ausgangsspannung in einem führenden Ausgangskanal, wie oben beschrieben, durch Ansteuerung der Eingangsschaltstufe zu regeln (primärseitige Regelung) und für die anderen Ausgangsspannungen eine zusätzliche sekundäre Regelschleife vorzusehen. Das Problem bei dieser Regelstrategie liegt darin, daß bei niedriger Last am führenden Ausgangskanal die Pulsbreite auf der Primärseite gering wird und alle anderen Kanäle ebenfalls auf niedrige Leistungsentnahme limitiert werden.

Dieses Verfahren kann speziell dann angewandt werden, wenn anwendungsbedingt ein Ausgangskanal permanent stärker belastet wird als alle anderen.

Wenn diese Voraussetzung anwendungsbedingt nicht sichergestellt ist, wird bevorzugt eine feste primäre Pulsbreite gewählt und jeder Ausgangskanal durch eine separate sekundäre Regelschleife geregelt. Die feste primäre Pulsbreite muß ausreichend groß gewählt werden, um auch bei maximaler Last ausreichend Leistung zur Verfügung zu stellen.

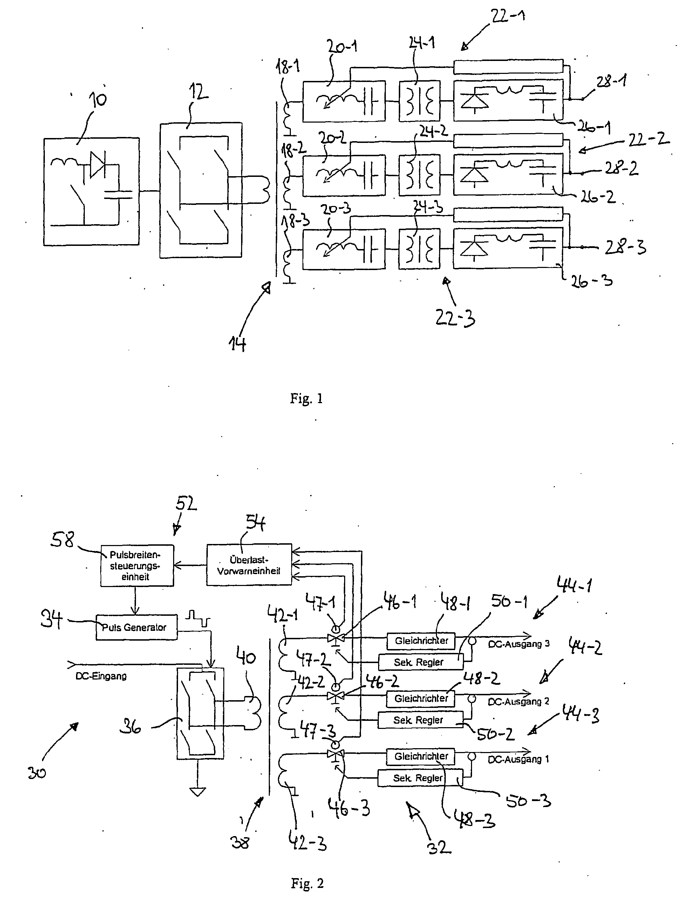

Fig. 1 zeigt ein Blockdiagramm einer solchen Stromversorgung mit Sekundärregelkreisen, die als dynamische Resonanzregelkreise ausgestaltet sind.

Auf der Eingangsseite der Stromversorgung wandelt ein vorgeschalteter PFC 10 einer Eingangs-Wechselspannung in eine primäre Gleichspannung um, welche die Eingangsschaltstufe des Mehrkanal-Gleichspannungswandlers speist. Veränderliche Resonanzkreise arbeiten als leistungsdrosselnde Elemente im Wechselspannungsbereich jedes Ausgangskanals. Daran schließen sich Anpassungstransformatoren und Ausgangsgleichrichternetzwerke an. Die in Fig. 1 gezeigte Schaltung ist veröffentlicht in: "High Power Densities at High Power Levels" von A. Jansen et al. In CIPS 2002, 2nd International Conference on Integrated Power Systems, 11.-12. Juni 2002, Bremen, DE.

In Fig. 1 wird die DCEingangsspannung über eine Vollbrücke 12 in die Primärwicklung 16 eines Haupttransformators 14 gespeist. Die Vollbrücke 12 schaltet mit einer festen Frequenz von beispielsweise 700 kHz, vorzugsweise im ZVS-Betrieb (Nullspannungsschalten). Der Haupttransformator 14 liefert an drei sekundären Ausgangswicklungen 18-1, 18-2, 18-3 identische Ausgangsspannungen. Diese werden über variable Impedanzen 20-1, 20-2, 20-3 und Anpassungstransformatoren 24-1, 24-2, 24-3 in zugehörige Gleichrichternetzwerke 26-1, 26-2, 26-3 gespeist. Die sekundären Regelschleifen sind bei 22-1, 22-2, 22-3 schematisch angedeutet. Die veränderbaren Impedanzen 20-1, 20-2, 20-3 sind über Steuerströme einstellbar und mit Kondensatoren in Reihe geschaltet. Die Kondensatoren stellen sicher, daß in der Nähe der Resonanz der LC-Glieder sehr niedrige Impedanzwerte erreicht werden können. Die variablen Impedanzen 20-1, 20-2, 20-3 können z.B. realisiert werden durch eine veränderbare Induktivität, eine veränderbare Kapazität oder einen Schwingkreis mit veränderbarer Resonanzfrequenz oder einen veränderbaren ohmschen Widerstand. Eine hierzu geeignete Spulenanordnung mit veränderbarer Induktivität ist beispielsweise in der deutschen Patentanmeldung Nr. 102 60 246.8 vom 20.12.2002 beschrieben.

Fig. 1 zeigt eine im Stand der Technik bekannte Möglichkeit der Regelung eines Gleichspannungswandlers mit mehreren Ausgangskanälen. Die Primärseite des Haupttransformators 14 wird mit einer festen Pulsbreite angesteuert, die so groß gewählt wird, daß auch bei maximaler Last eine ausreichende Leistungsabgabe sichergestellt ist. Die sekundären Ausgangskanäle werden dann jeweils abhängig von der tatsächlich anliegenden Last geregelt. Diese Regelungsvariante hat den Nachteil, daß in der Eingangsschaltstufe stets eine hohe Blindleistung zirkuliert. Die Blindströme verursachen an den ohmschen Widerständen im Eingangskreis (Schaltelelemente, Primärwicklung, Leiterbahnen, Eingangskondensator) Energieverluste. Im Teillastfall wird dadurch der Wirkungsgrad des Gleichspannungswandlers gesenkt, und im Leerlaufbetrieb resultiert daraus ein unnötig hoher Energieverbrauch.

Der Erfindung liegt die Aufgabe zugrunde, einen Gleichspannungswandler mit einer Eingangsschaltstufe und mehreren Ausgangskanälen anzugeben, der bei allen Lastbedingungen mit optimalen Wirkungsgrad arbeitet.

Diese Aufgabe wird durch einen Gleichspannungswandler mit den Merkmalen von Patentanspruch 1 gelöst.

Erfindungsgemäß weisen die Ausgangskanäle jeweils einen Sekundärregelkreis und eine Überwachungseinrichtung auf. Die Überwachungseinrichtung erfaßt, ob ihr zugehöriger Kanal in die Nähe eines Überlastzustands kommt, und erzeugt ein entsprechendes Signal. Zusätzlich ist ein Primärregelkreis vorgesehen, der die Ausgangssignale von den Überwachungseinrichtungen empfängt und die Leistung des Eingangskanals abhängig von diesen Ausgangssignalen regelt. Insbesondere erfaßt der Primärregelkreis, wenn wenigstens einer der Kanäle in die Nähe seines Überlastzustandes kommt, und steuert dementsprechend die Primärseite des Gleichspannungswandlers an, um eine höhere Eingangsleistung bereitzustellen. Zur Steuerung der Eingangsleistung wird auf der Primärseite des Gleichspannungswandlers ein Pulsbreitenmodulator verwendet. Durch die Erfindung kann erreicht werden, daß die auf der Primärseite eingestellte Pulsbreite gerade so groß wie nötig, jedoch nicht größer ist. Dadurch werden Verluste, die durch die Blindströme im Primärkreis an den ohmschen Widerständen des Primärkreises entstehen (sog. Verluste zweiter Ordnung), minimiert.

In einer bevorzugten Ausführungsform der Erfindung weist jeder. Ausgangskanal jeweils ein Leistungsventil auf, das Teil des Sekundärregelkreises ist und zum Einstellen der Ausgangsleistung dient. Das Leistungsventil wird vorzugsweise durch eine variable Induktivität realisiert, es kann jedoch auch durch eine einstellbare Kapazität oder einen einstellbaren Widerstand gebildet werden.

In anderen Worten beseitigt die vorliegende Erfindung den Nachteil des schlechten Wirkungsgrades im Teillastbereich dadurch, daß die Pulsbreite der Eingangsschaltstufe gesamtlastbedingt geregelt wird. D. h., daß die Pulsbreite nur gerade so groß gehalten wird, wie für den aktuellen Gesamtlastfall erforderlich. Die Information darüber, wann nun die Pulsbreite gerade groß genug ist, gewinnt man erfindungsgemäß durch Überwachung der den sekundären Leistungsfluß drosselnden Elemente. Dies können beispielsweise veränderbare Induktivitäten, veränderbare Kapazitäten, Transduktoren, dynamische Resonanzkreise oder auch Transistoren sein. Sie wirken jedenfalls als steuerbare Ventile für den sekundären Leistungsfluß und sind in Fig. 2 mit dem allgemeinen Symbol für ein Ventil gekennzeichnet. Das entscheidende Charakteristikum für diese Elemente ist ihre minimale Impedanz, die in der spezifischen Anwendung möglich ist, oder anders ausgedrückt, ihr maximal möglicher Öffnungsgrad für den Leistungsfluß. Nähert sich die durch die sekundäre Regelschleife eingestellte Impedanz der minimal möglichen, ist dies ein Zeichen, daß der betreffende Kanal sich dem Ende seines Regelbereiches nähert und die Eingangsschaltstufe die Pulsbreite erhöhen sollte, damit bei einem eventuellen weiteren Lastanstieg das Ende des sekundären Regelbereiches nicht erreicht wird. Die Nähe zur minimalen Impedanz kann im allgemeinen an der Steuergröße des drosselnden Elements (z. B. Vormagnetisierungsstrom beim Transduktor, Basisstrom beim Transistor, ...) erkannt werden.

Zur Überwachung der Ausgangsleistungen der Ausgangskanäle weist jeder Ausgangskanal vorzugsweise einen Überlastdetektor auf, der überwacht, ob der Kanal in die Nähe eines Überlastzustandes kommt, und entsprechende Signale erzeugt. In einer vorteilhaften Ausführungsform ist der Überlastdetektor mit dem Leistungsventil gekoppelt und erfaßt insbesondere eine Steuergröße des Leistungsventils, die abhängig ist von der am Ausgangskanal angeforderten Ausgangsleistung.

In einer vorteilhaften Ausführungsform der Erfindung geben die Überwachungseinrichtungen ihre Ausgangssignale an eine Überlast-Vorwarneinheit weiter, welche feststellt, ob irgendein Ausgangskanal sich seiner maximalen Belastbarkeit nähert. Die Überlast-Vorwarneinheit verwendet abhängig von dem Ergebnis dieser Prüfung das zugehörige Ausgangssignal zur Regelung der Leistung des Eingangskanals und insbesondere zur Einstellung der Pulsbreite eines Pulsbreitenmodulators eines Eingangskanals.

Die Nähe zum Ende des Regelbereiches wird von der Überlast-Vorwarneinheit erkannt, und eine Vergrößerung der Pulsbreite wird bei einer Pulsbreitensteuerungseinheit angefordert. Die Pulsbreitensteuerungseinheit reagiert auf diese Anforderung mit einer Erhöhung der Pulsbreite im Pulsbreitenmodulator. Diese Änderung darf nicht sprunghaft erfolgen, sondern muß nach einer definierten Anstiegsrate verlaufen. Sobald das Signal der Vorwarneinheit erlischt, verringert die Pulsbreitensteuerungseinheit die Pulsbreite mit einer definierten Abfallrate. Die Änderungsraten müssen ausreichend klein gewählt werden, damit die sekundären Regelkreise die durch die Änderung der Pulsbreite bedingten Störungen sauber ausregeln können. Die Abfallrate ist relativ unproblematisch, da sie lediglich bestimmt, wie schnell nach einer Lastverringerung das Effizienzoptimum erreicht wird. Zeiten von 10 bis 100 Millisekunden sind im Allgemeinen vollkommen ausreichend. Diese langsamen Änderungen sind für die Sekundärregler leicht auszuregeln. Die Anstiegsrate hingegen muß möglichst hoch dimensioniert werden, damit nach abrupten Lastanstiegen kein Spannungseinbruch am belasteten Kanal auftritt. Die Grenze für die zulässige Anstiegsrate bildet wiederum die Ausregelbarkeit der Störung durch die Sekundärregler.

In einer vorteilhaften Ausführungsform der Erfindung ist schließlich noch vorgesehen, daß die Pulsbreitensteuereinheit eine obere und eine untere Grenze für die Pulsbreite des Pulsbreitenmodulators festlegt. Eine Obergrenze für die Pulsbreiten des Pulsbreitenmodulators, oder allgemeiner für die Eingangsleistung, ist notwendig, um sicherzustellen, daß das Gleichspannungswandler innerhalb sicherer Betriebsgrenzen arbeitet. Eine Untergrenze, die eine Mindest-Pulsbreite festlegt, ist notwendig, um auch dann, wenn keine Leistung entnommen wird, gewährleisten zu können, daß der Gleichspannungswandler noch sicher in einer Betriebsart mit Nullspannungsschalten (ZVS) betrieben werden kann. Der Strom muß insbesondere ausreichend groß sein, um ein genügend schnelles Umladen der parasitären Schalterkapazitäten zu gewährleisten. Ferner sollte die Vorwarnschwelle für den Überlastzustand der jeweiligen Ausgangskanäle unter Berücksichtigung der Größe der maximal zulässigen Lastsprünge festgelegt werden. Wenn große Lastsprünge zu erwarten sind, muß die Vorwarnschwelle niedriger angesetzt werden, um zu verhindern, daß der Kanal bei einem großen Lastsprung seine Überlastgrenze erreicht.

Das beschriebene Verfahren ermöglicht Effizienzverbesserungen an Gleichspannungswandlern, die mehrere sekundär geregelte Ausgangsspannungen von einer einzigen Eingangsschaltstufe ableiten. Die leistungsdrosselnden Elemente jedes geregelten Ausgangskanals werden auf ihren Öffnungsgrad bzw. Aussteuerungsgrad überwacht. Solange dieser Öffnungsgrad bei keinem der Elemente einen definierten kritischen Wert überschreitet (Vorwarnschwelle), wird die Pulsbreite der Eingangsschaltstufe stetig reduziert. Sobald zumindest ein Element einen kritischen Wert überschreitet, wird die Pulsbreite stetig erhöht. Durch diese Regelung wird erreicht, daß die primäre Pulsbreite bei jeder Ausgangslastkonfiguration stets minimiert ist. Dadurch werden die Brückenströme im Eingangskreis minimiert und der Wirkungsgrad des Wandlers maximiert.

Um das Schalten im Nulldurchgang der Spannung an den Schaltern (ZVS) auch bei geringer Last zu gewährleisten und als einen Überlastschutz sieht der erfindungsgemäße Gleichspannungswandler untere und obere Grenzen für die Pulsbreite auf der Primärseite vor.

Die Erfindung ist im folgenden anhand bevorzugter Ausführungsformen mit Bezug auf die Zeichnung näher erläutert. In den Figuren zeigen:
- Fig. 1: ein Blockschaltbild eines Schaltnetzteils gemäß dem Stand der Technik;
- Fig. 2: ein Blockschaltbild des Gleichspannungswandlers gemäß der Erfindung; und
- Fig. 3: ein Schaltbild einer praktischen Ausführungsform des Primärregelkreises für den Gleichspannungswandler gemäß der Erfindung.

Fig. 2 zeigt ein Blockschaltbild des Gleichspannungswandlers gemäß der Erfindung. Der Gleichspannungswandler umfaßt eine Eingangsschaltstufe 30 auf einer Primärseite des Gleichspannungswandlers und drei Ausgangskanäle 32 auf der Sekundärseite des Gleichspannungswandlers. Ein Fachmann wird verstehen, daß die Erfindung auch auf Gleichspannungswandler mit mehr oder weniger Ausgangskanälen als in Fig. 2 gezeigt anwendbar ist. Die Eingangsschaltstufe 30 umfaßt einen Pulsbreitenmodulator 34, der durch einen Impulserzeuger-IC realisiert sein kann. Der Ausgang des Pulsbreitenmodulators 34 ist mit dem Eingang einer Vollbrücke 36 verbunden, die das Ausgangssignal des Pulsbreitenmodulators 34 gleichrichtet. Der Aufbau und die Ansteuerung solcher Vollbrücken ist im Stand der Technik bekannt und z.B. beschrieben in der deutschen Patentanmeldung Nr. 101 03 809.7 vom 29. Januar 2001. Der Ausgang der Brücke 36 ist mit einem Haupttransformator 38 verbunden. Der Haupttransformator 38 weist auf der Primärseite eine Primärwicklung 40 und auf der Sekundärseite drei identische Sekundärwicklungen 42-1, 42-2 und 42-3 auf. Ein Fachmann wird verstehen, daß die Sekundärwicklungen auch unterschiedliche Windungszahlen haben können. Der Einfachheit halber wird jedoch davon ausgegangen, daß sämtliche Ausgangskanäle auf der Sekundärseite des Haupttransformators 38 gleich aufgebaut sind, wie unten noch mit weiteren Einzelheiten erläutert ist.

Wie in der Ausführungsform der Fig. 1 weist der Gleichspannungswandler drei Ausgangskanäle 44-1, 44-2 und 44-3 auf, die im wesentlichen identisch aufgebaut sind, jedoch unterschiedliche Spannungen von z.B. +3,3 V, +5 V und +12 V ausgeben.

Jeder Ausgangskanal 44-1, 44-2 und 44-3 umfaßt ein Leistungsventil 46-1, 46-2, 46-3 zur Einstellung der von dem jeweiligen Kanal ausgegebenen Ausgangsleistung. Dieses Leistungsventil kann durch eine variable Induktivität, einen Transduktor, eine variable Kapazität, ein LC-Glied mit einstellbarer Resonanzfrequenz oder auch durch einen einstellbaren ohmschen Widerstand beispielsweise realisiert mittels eines Transistors gebildet werden. Bei einer bevorzugten Ausführungsform wird das Leistungsventil 46-1, 46-2, 46-3 durch eine über einen Strom steuerbare Induktivität realisiert, wie sie z.B. in der oben angegebenen deutschen Patentanmeldung Nr. 102 60 246.8 beschrieben ist. Es sei bemerkt, daß die Steuerventile sowohl auf der Wechselstromseite als auch auf der Gleichstromseite der Ausgangskanäle angeordnet sein können.

Jeder Ausgangskanal 44-1, 44-2, 44-3 weist ferner ein Gleichrichternetzwerk 48-1, 48-2 bzw. 48-3 auf, das eine gleichgerichtete Ausgangsspannung erzeugt.

Schließlich ist in jedem Ausgangskanal ein Sekundärregelkreis 50-1, 50-2, 50-3 vorgesehen, um die Ausgangsspannung des jeweiligen Kanals unabhängig von der Last auf einen konstanten Wert zu regeln. Hierzu steuern die jeweiligen Sekundärregelkreise 50-1, 50-2 und 50-3 ihre zugehörigen Leistungsventile 46-1, 46-2 bzw. 46-3 an.

Um sicherzustellen, daß der Gleichspannungswandler über den Pulsbreitenmodulator 34 mit ausreichend Leistung versorgt wird, und um gleichzeitig die von dem Pulsbreitenmodulator 34 ausgegebene Pulsbreite so gering wie möglich zu halten, weist der erfindungsgemäße Gleichspannungswandler zusätzlich einen Primärregelkreis 52 auf. Der Primärregelkreis 52 umfaßt eine Überlast-Vorwarneinheit 54 und eine Pulsbreiten-Steuerungseinheit 58 auf. Die Überlast-Vorwarneinheit 54 erfaßt die jeweiligen Lastzustände der Ausgangskanäle 44-1, 44-2, 44-3, indem sie die Steuergröße der Leistungsventile 46-1, 46-2 und 46-3, z. B. den Steuerstrom, abfragt. Hierzu sind Überwachungseinrichtungen 47-1, 47-2, 47-3 vorgesehen, welche die Steuergröße erfassen. Die Steuergrößen werden mit vorgegebenen Schwellwerten verglichen, um festzustellen, ob ein kritischer Wert überschritten ist, der anzeigt, daß der jeweilige Kanal sich seiner Aussteuergrenze nähert. Die Überlast-Vorwarneinheit 54 erkennt, daß ein Ausgangskanal das Ende seines Regelbereichs erreicht, wenn die entsprechende Steuergröße den kritischen Wert überschreitet, und gibt ein entsprechendes Signal zur Vergrößerung der Pulsbreite an die Pulsbreiten-Steuerungseinheit 58. Die Pulsbreiten-Steuerungseinheit 58 reagiert auf diese Anforderung mit der Ausgabe eines entsprechenden Signals zur Erhöhung der Pulsbreite an den Pulsbreitenmodulator 34.

Die Pulsbreiten-Steuerungseinheit 58 stellt auch Grenzwerte für eine maximale Pulsbreite und eine minimale Pulsbreite ein, um eine Überlastung des Gleichspannungswandlers zu vermeiden bzw. den Anforderungen bezüglich des Nullspannungsschaltens (ZVS) auch bei geringer Last und im Leerlauf zu genügen.

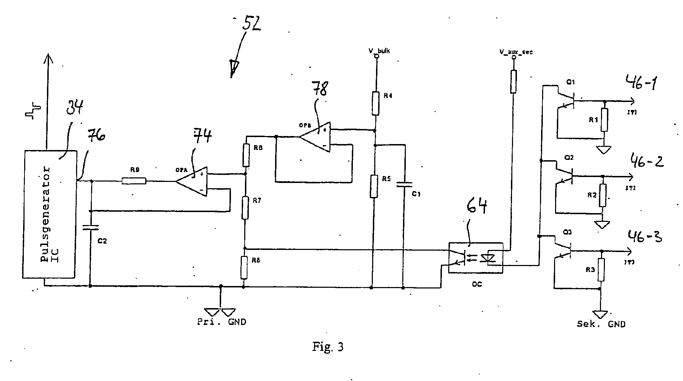

Fig. 3 zeigt beispielhaft ein Schaltbild für eine mögliche Ausführung des Primärregelkreises des erfindungsgemäßen Mehrkanal-Gleichspannungswandlers mit Sekundärregelkreisen, welche durch dynamische Resonanzregelkreise realisiert sind. Bei der gezeigten Ausführung hat der Pulsbreitenmodulator 34, der auch als Pulsgenerator bezeichnet wird, einen analogen Eingang mit folgenden Eigenschaften: Die Ausgangspulsbreite ist für Spannungen unterhalb von 3,5 Volt maximal und verringert sich.linear mit steigender Spannung, wobei sie bei 4,5 Volt Null wird. Der Pulsbreitenmodulator 34 kann durch einen handelsüblichen Pulsgenerator-IC realisiert werden, wobei es zahlreiche Pulsbreiten-IC's gibt, die ähnliche lineare Steuereingänge haben.

Der Primärregelkreis 52 empfängt als Eingangssignale die Steuerströme IT1, IT2, IT3 der Leistungsventile bei 46-1, 46-2 und 46-3. Diese Leistungsventile, oder Leistungsdrosselelemente, können z. B. stromsteuerbare Resonanzkreisinduktoren sein. Die Vormagnetisierungsströme (Steuerströme) IT1, IT2, IT3 dieser Resonanzkreisinduktoren werden über Strommeßwiderstände R1, R2 bzw. R3 geführt und steuern zugehörige Transistoren Q1, Q2 bzw. Q3 an. Durch geeignete Wahl der Widerstände können individuelle Schwellwerte für das Auslösen einer Vorwarnung festgelegt werden. Sobald in irgendeinem der Ausgangskanäle der Steuerstrom ausreichend groß ist, wird der zugehörige Transistor Q1, Q2, Q3 leitend und aktiviert einen Optokoppler, OC, 64, der das Spannungsverhältnis eines Spannungsteilers aus den Widerständen R6, R7, R8 verändert. Der Optokoppler 64 verändert dadurch die dem analogen Steuereingang 76 des Pulsbreitenmodulator-IC 34 über einen Operationsverstärker (Spannungsfolger; OPA) 74 zugeführte Spannung. Mittels eines Widerstandes R9 und eines Kondensators C2 kann die Änderungsrate für die Pulsbreitenänderung vorgegeben werden.

Der Spannungsteiler R6, R7, R8 hat die zusätzliche Funktion, das Ansteuersignal für den Operationsverstärker 74 innerhalb eines gewünschten Fensters zu halten, und gewährleistet die bereits erörterten maximalen und minimalen Grenzen für die Pulsbreiten. Dieser Spannungsteiler wird im wesentlichen durch eine Konstantspannung von einem Operationsverstärker (OPB) 78 gespeist. Diese Konstantspannung wird über einen Spannungsteiler R4, R5 und einen Kondensator C1 von der Eingangs-Gleichspannung V_{BULK} des Gleichspannungswandlers abgeleitet. Dies birgt den zusätzlichen Vorteil, daß auch bei einem Absinken der Eingangsgleichspannung V_{BULK} des Gleichspannungswandlers die Pulsbreite erhöht wird, wodurch sich die Netzausfallüberbrückungszeit verbessert.

Der Primärregelkreis 52 umfaßt einen der Sekundärseite des Gleichspannungswandlers zugeordneten Abschnitt (in der Figur rechts von dem Optokoppler 64) und einen der Primärseite zugeordneten Abschnitt. Der der Sekundärseite zugeordneten Abschnitt ist mit einer Hilfsversorgungsspannung V_{/AUX/SEK} und der sekundärseitigen Masse SEK.GND verbunden. Der der Primärseite zugeordneten Abschnitt des Primärregelkreises 52 ist mit der Versorgungsspannung V_{BULK} und der primärseitigen Masse PRI.GND verbunden.

Die in der vorstehenden Beschreibung, den Ansprüchen und den Figuren offenbarten Merkmale können sowohl einzeln als auch in beliebiger Kombination für die Verwirklichung der Erfindung in den verschiedenen Ausgestaltungen von Bedeutung sein.

### Bezugszeichenliste

- 10: PFC
- 12: Vollbrücke
- 14: Haupttransformator
- 16: Primärwicklung
- 18-1, 18-2, 18-3: Sekundärwicklungen
- 20-1,20-2,20-3: Impedanzen
- 22-1, 22-2, 22-3: Sekundäre Regelschleifen
- 24-1, 24-2,24-3: Anpassungstransformatoren
- 26-1,26-2,26-3: Gleichrichterschaltkreise
- 28-1,28-2,28-3: Ausgangsspannungen
- 30: Eingangsschaltstufe
- 32: Ausgangskanäle
- 34: Pulsbreitenmodulator
- 36: Vollbrücke
- 38: Haupttransformator
- 40: Primärwicklung
- 42-1, 42-2, 42-3: Sekundärwicklungen
- 44-1, 44-2, 44-3: Ausgangskanäle
- 46-1, 46-2, 46-3: Leistungsventile
- 47-1, 47-2, 47-3: Überwachungseinrichtungen
- 48-1, 48-2, 48-3: Gleichrichter
- 50-1, 50-2, 50-3: Sekundärregelkreise
- 52: Primärregelkreis
- 54: Überlast-Vorwarneinheit
- 58: Pulsbreiten-Steuerungseinheit
- R1, R2, R3: Strommeßwiderstände
- Q 1, Q2, Q3: Transistoren
- 64: Optokoppler OC
- R4, R5, R6, R7, R8, R9: Widerstände
- 74: Operationsverstärker OPA
- 76: Pulsbreiten-Pin
- 78: Operationsverstärker OPB
- C1, C2: Kondensatoren

## Patentansprüche

1. Gleichspannungswandler mit einer Eingangsschaltstufe (30) auf der Primärseite und mehreren Ausgangskanälen (44-1, 44-2, 44-3) auf der Sekundärseite des Wandlers, wobei die Ausgangskanäle jeweils einen Sekundärregelkreis (50-1, 50-2, 50-3) mit einem leistungsdrosselnden Element (46) und eine Überwachungseinrichtung (47-1, 47-2, 47-3) aufweisen, wobei die Überwachungseinrichtungen (47-1, 47-2, 47-3) den Grad der Ansteuerung der leistungsdrosselnden Elemente (46) überwachen, und auf der Primärseite ein Primärregelkreis (52) vorgesehen ist, der Ausgangssignale von den Überwachungseinrichtungen (47-1, 47-2, 47-3) empfängt und die Eingangsschaltstufe (30) abhängig von den Ausgangssignalen ansteuert.

2. Gleichspannungswandler nach Anspruch 1, **dadurch gekennzeichnet, daß** jeder Ausgangskanal (44-1, 44-2, 44-3) je ein Leistungsventil (46-1, 46-2, 46-3) und eine Überwachungseinrichtung für das Leistungsventil (47-1, 47-2, 47-3) aufweist, die dessen Aussteuerung erfaßt.

3. Gleichspannungswandler nach Anspruch 2, **dadurch gekennzeichnet, daß** das Leistungsventil (46-1, 46-2, 46-3) eine variable Induktivität umfaßt.

4. Gleichspannungswandler nach einem der vorangehenden Ansprüche, **dadurch gekennzeichnet, daß** jeder Ausgangskanal (44-1, 44-2, 44-3) eine andere Ausgangsspannung erzeugt.

5. Gleichspannungswandler nach einem der vorangehenden Ansprüche, **dadurch gekennzeichnet, daß** die Eingangsschaltstufe (30) einen Pulsbreitenmodulator (34) aufweist, der durch den Primärregelkreis (52) angesteuert wird.

6. Gleichspannungswandler nach Anspruch 5, **gekennzeichnet durch** eine Überlast-Vorwameinheit (54), welche die Ausgangssignale der Überwachungseinrichtungen (47-1, 47-2, 47-3) auswertet und abhängig von dem Ergebnis die Pulsbreite der Eingangsschaltstufe verändert.

7. Gleichspannungswandler nach Anspruch 2 und Anspruch 6, **dadurch gekennzeichnet, daß** die Überlast-Vorwarneinheit (54) den Ansteuerungsgrad der Leistungsventile (46-1, 46-2, 46-3) erfaßt und abhängig davon die Nähe zu einem Überlastzustand erkennt.

8. Gleichspannungswandler nach einem der vorangehenden Ansprüche, **dadurch gekennzeichnet, daß** der Primärregelkreis (52) eine Steuereinheit (58) aufweist, die einen unteren und/oder einen oberen Grenzwert für die Ansteuerung der Eingangsschaltstufe (30) vorgibt.

9. Schaltnetzteil mit Gleichspannungswandler nach einem der vorangehenden Ansprüche.

10. Verfahren zum Betreiben eines Gleichspannungswandlers mit einer Eingangsschaltstufe (30) auf der Primärseite und mehreren Ausgangskanälen (44-1, 44-2, 44-3) auf der Sekundärseite des Wandlers, wobei die Ausgangskanäle jeweils einen Sekundärregelkreis (50-1, 50-2, 50-3) mit einem leistungsdrosselnden Element (46) aufweisen und der Primärregelkreis einen Pulsbreitenmodulator aufweist, mit folgenden Verfahrensschritten: Erfassung des Grades der Aussteuerung der leistungsdrosselnden Elemente (46) und Ansteuern des Pulsbreitenmodulators auf der Primärseite abhängig von dem Grad der Aussteuerung der leistungsdrosselnden Elemente (46).

11. Verfahren nach Anspruch 10, **dadurch gekennzeichnet, daß** die Sekundärregelkreise auf eine Nahe-Überlastbedingung überwacht werden, um ein Überlast-Warnsignal zu erzeugen, und daß beim Auftreten eines Überlast-Warnsignals in wenigstens einem der Ausgangskanäle die Pulsbreitenmodulatorschaltung auf der Primärseite so angesteuert wird, daß die Pulsbreite vergrößert wird.

12. Verfahren nach Anspruch 11, **dadurch gekennzeichnet, daß** die Pulsbreitenmodulatorschaltung auf der Primärseite so angesteuert wird, daß die Pulsbreite verringert wird, solange kein Überlast-Warnsignal erfaßt wird.

13. Verfahren nach einem der Ansprüche 10 bis 12, **dadurch gekennzeichnet, daß** die Pulsbreitenmodulatorschaltung auf der Primärseite so angesteuert wird, daß die Pulsbreite einen vorgegebenen Minimalwert nicht unterschreitet und einen vorgegebenen Maximalwert nicht überschreitet.

## Claims

1. A DC voltage converter including an input switching stage (30) on the primary side and a plurality of output channels (44-1, 44-2, 44-3) on the secondary side of the converter, wherein
each of the output channels comprises a secondary control loop (50-1, 50-2, 50-3) including a power-throttling element (46) and a monitoring device (47-1, 47-2, 47-3), wherein
the monitoring devices (47-1, 47-2, 47-3) monitor the level of control of the power-throttling elements (46), and
on the primary side a primary control loop (52) is provided, which receives output signals from the monitoring devices (47-1, 47-2, 47-3) and controls the input switching stage (30) as a function of the output signals.

2. The DC voltage converter according to Claim 1,
**characterised in that** each output channel (44-1, 44-2, 44-3) comprises a power valve (46-1, 46-2, 46-3) and a monitoring device for the power valve (47-1, 47-2, 47-3), which records the control of the latter.

3. The DC voltage converter according to Claim 2,
**characterised in that** the power valve (46-1, 46-2, 46-3) includes a variable inductance.

4. The DC voltage converter according to one of the previous claims,
**characterised in that** each output channel (44-1, 44-2, 44-3) generates a different output voltage.

5. The DC voltage converter according to one of the previous claims,
**characterised in that** the input switching stage (30) comprises a pulse width modulator (34), which is driven by the primary control circuit (52).

6. The DC voltage converter according to Claim 5,
**characterised by** an overload warning unit (54), which evaluates the output signals of the monitoring devices (47-1, 47-2, 47-3) and modifies the pulse width of the input switching stage as a function of the result.

7. The DC voltage converter according to Claim 2 and Claim 6,
**characterised in that** the overload warning unit (54) detects the level of control of the power valves (46-1, 46-2, 46-3) and detects the proximity to an overload state as a function thereof.

8. The DC voltage converter according to one of the previous claims,
**characterised in that** the primary control circuit (52) comprises a control unit (58), which specifies a lower and/or an upper limiting value for the control of the input switching stage (30).

9. A switching power supply comprising the DC voltage converter according to one of the previous claims.

10. A method for the operation of a DC voltage converter including an input switching stage (30) on the primary side and a plurality of output channels (44-1, 44-2, 44.3-3) on the secondary side of the converter, wherein each of the output channels comprises a secondary control circuit (50-1, 50-2, 50-3) including a power-throttling element (46) and wherein the primary control circuit comprises a pulse width modulator, the method comprising the steps of:
detecting the level of control of the power-throttling elements (46) and driving the pulse width modulator on the primary side as a function of the level of control of the power-throttling elements (46).

11. The method according to Claim 10,
**characterised in that** the secondary control circuits are monitored with respect to a near-overload condition, in order to generate an overload warning signal, and
**in that** with the occurrence of an overload warning signal in at least one of the output channels the pulse width modulation circuit on the primary side is controlled such that the pulse width is increased.

12. The method according to Claim 11,
**characterised in that** the pulse width modulation circuit on the primary side is controlled such that the pulse width is reduced as long as no overload warning signal is detected.

13. The method according to one of the Claims 10 to 12,
**characterised in that** the pulse width modulation circuit on the primary side is controlled such that the pulse width does not fall below a specified minimum value and does not exceed a specified maximum value.

## Revendications

1. Convertisseur continu-continu avec un étage de commutation d'entrée (30) du côté primaire et plusieurs canaux de sortie (44-1, 44-2, 44-3) du côté secondaire du convertisseur, les canaux de sortie présentant respectivement un circuit de régulation secondaire (50-1, 50-2, 50-3) avec un élément réducteur de puissance (46) et un dispositif de surveillance (47-1, 47-2, 47-3), les dispositifs de surveillance (47-1, 47-2, 47-3) surveillant le degré de pilotage des éléments réducteurs de puissance (46), et du côté primaire étant prévu un circuit de régulation primaire (52), qui reçoit des signaux de sortie des dispositifs de surveillance (47-1, 47-2, 47-3) et commande l'étage de commutation d'entrée (30) en fonction des signaux de sortie.

2. Convertisseur continu-continu selon la revendication 1, **caractérisé en ce que** chaque canal de sortie (44-1, 44-2, 44-3) comprend respectivement une vanne de puissance (46-1, 46-2, 46-3) et un dispositif de surveillance pour la vanne de puissance (46-1, 46-2, 46-3), qui comprend la commande de celle-ci.

3. Convertisseur continu-continu selon la revendication 2, **caractérisé en ce que** la vanne de puissance (46-1, 46-2, 46-3) comprend une inductivité variable.

4. Convertisseur continu-continu selon l'une quelconque des revendications précédentes, **caractérisé en ce que** chaque canal de sortie (44-1, 44-2, 44-3) produit une autre tension de sortie.

5. Convertisseur continu-continu selon l'une quelconque des revendications précédentes, **caractérisé en ce que** l'étage de commutation d'entrée (30) comprend un modulateur d'impulsions en largeur (34), qui est commandé par le circuit de régulation primaire (52).

6. Convertisseur continu-continu selon la revendication 5, **caractérisé par** une unité d'avertissement de surcharge (54), laquelle évalue les signaux d'entrée des dispositifs de surveillance (47-1, 47-2, 47-3) et modifie en fonction du résultat la largeur d'impulsion de l'étage de commutation d'entrée.

7. Convertisseur continu-continu selon la revendication 2 et la revendication 6, **caractérisé en ce que** l'unité d'avertissement de surcharge (54) détecte le degré de pilotage des vannes de puissance (46-1, 46-2, 46-3) et reconnaît en fonction de ce dernier l'approche d'un état de surcharge.

8. Convertisseur continu-continu selon l'une quelconque des revendications précédentes, **caractérisé en ce que** le circuit de régulation primaire (52) présente une unité de commande (58), qui prescrit une valeur limite inférieure et/ou supérieure pour la commande de l'étage de commutation d'entrée (30).

9. Partie de réseau de distribution avec convertisseur continu-continu selon l'une quelconque des revendications précédentes.

10. Procédé pour faire fonctionner un convertisseur continu-continu avec un étage de commutation d'entrée (30) du côté primaire et plusieurs canaux de sortie (44-1, 44-2, 44-3) du côté secondaire du convertisseur, les signaux de sortie présentant respectivement un circuit de régulation secondaire (50-1, 50-2, 50-3) avec un élément réducteur de puissance (46) et le circuit de régulation primaire présentant un modulateur d'impulsions en largeur, avec les étapes de procédé suivantes : détection du degré de pilotage des éléments réducteurs de puissance (46) et commande du modulateur d'impulsions en largeur du côté primaire en fonction du degré de commande des éléments réducteurs de puissance (46).

11. Procédé selon la revendication 10, **caractérisé en ce que** les circuits de régulation secondaires sont contrôlés selon une condition de surcharge proche, afin de produire un signal d'avertissement de surcharge, et **en ce que**, lors de l'apparition d'un signal d'avertissement de surcharge, dans au moins un des canaux de sortie, le circuit modulateur d'impulsions en largeur du côté primaire est commandé de façon à ce que la largeur d'impulsion soit agrandie.

12. Procédé selon la revendication 11, **caractérisé en ce que** le circuit modulateur d'impulsions en largeur du côté primaire est commandé de façon à ce que la largeur d'impulsion soit réduite tant qu'aucun signal d'avertissement de surcharge n'est détecté.

13. Procédé selon l'une quelconque des revendications 10 à 12, **caractérisé en ce que** le circuit modulateur d'impulsions en largeur du côté primaire est commandé de façon à ce que la largeur d'impulsion ne passe pas en deçà d'une valeur minimale prescrite et ne dépasse pas une valeur maximale prescrite.
